# EUROPÄISCHE PATENTSCHRIFT

(11) **EP 3 831 745 B1**
(45) Veröffentlichungstag und Bekanntmachung des Hinweises auf die Patenterteilung: **11.05.2022**
(21) Anmeldenummer: 20203542.4
(22) Anmeldetag: 23.10.2020
(51) Int. Cl.: B65G 39/09, F16C 13/00, F16C 35/067

(54) **VORRICHTUNG ZUR SEITENFÜHRUNG EINES FÖRDERBANDS**
DEVICE FOR LATERAL GUIDANCE OF A CONVEYOR BELT
DISPOSITIF DE GUIDAGE LATÉRAL D'UNE BANDE TRANSPORTEUSE

(30) Priorität: 04.12.2019 AT 510572019
(43) Veröffentlichungstag der Anmeldung: 09.06.2021
(73) Patentinhaber: Hoessl GmbH, 4210 Gallneukirchen (AT)
(72) Erfinder: Hoessl, Peter, 4210 Gallneukirchen (AT)
(74) Vertreter: Hübscher & Partner Patentanwälte GmbH

(56) Entgegenhaltungen:
- JP-U- S48 109 682
- SE-B- 448 365
- US-A- 5 046 869
- Luffindustries: "Conveyor System Accessories By Luff Industries", , 6. Februar 2019 (2019-02-06), XP055785893, Gefunden im Internet: URL:https://www.slideshare.net/luffindustr ies/conveyor-system-accessories-by-luff-in dustries [gefunden am 2021-03-15]

## Beschreibung

Die Erfindung bezieht sich auf eine Vorrichtung zur Seitenführung eines Förderbands mit einer Bandrolle, deren Rollenkörper aus Kunststoff auf einer Tragachse mithilfe von zwei mit axialem Abstand voneinander angeordneten Wälzlagern frei drehbar gelagert ist, die an einem zwischen ihnen vorgesehen Bund der Tragachse gegenüber dieser axial abgestützt sind.

Um eine Bandrolle mit einem Rollenkörper aus Kunststoff, üblicherweise aus Polyurethan, entsprechend den bei der Seitenbandführung auftretenden Belastungen zu lagern, ist es bekannt, den Rollenkörper entweder an die hierfür im Bereich der beiden Stirnseiten der Bandrolle vorgesehenen Wälzlager anzuformen oder mit einer die Wälzlager aufnehmenden metallischen Lagerhülse zu versehen. Da solche Bandrollen aus Kunststoff einem Verschleiß unterworfen sind und daher wiederholt ausgewechselt werden müssen, ist es als Nachteil anzusehen, wenn der Rollenkörper aus Kunststoff mit Metallteilen versehen ist.

Der Katalog "Conveyor System Accessories By Luff Industries" offenbart eine Vorrichtung zur Seitenführung eines Förderbands nach dem Oberbegriff des Anspruchs 1. Es ist aber auch bekannt, die Wälzlager ohne zusätzliche Lagerhülse von beiden Stirnseiten des Rollenkörpers her in stirnseitige Lagerausnehmungen des Rollenkörpers einzusetzen. Da sich die Wälzlager jedoch an einem zwischen ihnen vorgesehenen Bund der Tragachse axial abstützen und mithilfe von Sprengringen in Anlage an diesem Bund gehalten werden, muss bei einem Wechsel des Rollenkörpers das Wälzlager am freien Ende der Tragachse von der Tragachse abgezogen werden.

Um Wälzlager in einfacher Art in einem Gehäuse axial festlegen zu können ist es außerdem bekannt (CA 2 046 106 A1), im Gehäuse das Wälzlager umfassende, federnde Rastzungen vorzusehen, die beim axialen Einsetzen des Wälzlagers in die Lagerausnehmung des Gehäuses radial nach außen ausgelenkt werden und das eingesetzte Wälzlager umfassen, sodass das Wälzlager durch die Rastzungen in Anlage an einem axialen Gehäuseanschlag gehalten werden. Um die Rastzungen in der das Wälzlager umgreifenden Raststellung zu sichern, werden die Rastzungen durch einen sie umschließenden Sicherungsring an einem Auslenken gehindert. Eine solche axiale Sicherung der Wälzlager berührt jedoch die Schwierigkeiten nicht, die sich im Zusammenhang der Lagerung von Bandrollen mit einer axialen Abstützung der beiden Wälzlager an einem gemeinsamen zwischen ihnen vorgesehenen Bund der Tragachse ergeben.

Der Erfindung liegt somit die Aufgabe zugrunde, eine Seitenführung für ein Förderband mit einer Bandrolle so auszugestalten, dass beim Wechseln der Bandrolle lediglich der Rollenkörper aus Kunststoff zu ersetzen ist, und zwar ohne Notwendigkeit, ein Wälzlager ausbauen zu müssen.

Die Erfindung löst die gestellte Aufgabe dadurch, dass die beiden Wälzlager zwischen einer Stirnwand des Rollenkörpers und radial einspringenden, durch eine Ringnut auf der der Stirnwand gegenüberliegenden Stirnseite vom übrigen Rollenkörper getrennten, federnden Rastzungen gegenüber dem Rollenkörper axial festgehalten sind, und dass ein Sperrring formschlüssig in die Ringnut des Rollenkörpers eingreift.

Zufolge dieser Maßnahmen kann der Rollenkörper aus Kunststoff auf das mit den beiden Wälzlagern versehene freie Ende der Tragachse aufgeschoben werden, weil die radial einspringenden Rastzungen des Rollenkörpers bei nicht in die Ringnut eingesetztem Sperrring durch die mit der Tragachse in den Rollenkörper eingeschobenen Wälzlager auswärts gegen die Ringnut gedrückt werden und dadurch den Weg für das Einsetzen der Wälzlager freigeben, um nach dem Vorbeibewegen der Wälzlager wieder federbedingt in die radial einspringende Raststellung rückgestellt zu werden. Dies bedeutet, dass aufgrund der gegebenen Abstimmung des axialen Abstands der Rastzungen von der gegenüberliegenden Stirnwand des Rollenkörpers auf den gegenseitigen Wälzlagerabstand die beiden Wälzlager zwischen der Stirnwand des Rollenkörpers und den Rastzungen axial abgestützt werden, was in Verbindung mit der axialen Abstützung am Ansatz der Tragachse zwischen den beiden Wälzlagern zu einer unverschiebbaren Halterung der Wälzlager sowohl gegenüber der Tragachse als auch gegenüber dem Rollenkörper führt. Diese Wälzlagerfestlegung wird durch den in die Ringnut eingesetzten Sperrring gesichert, weil durch den Sperrring eine Verlagerung der Rastzungen radial auswärts unterbunden wird. Zum Abziehen des Rollenkörpers aus Kunststoff von der Tragachse muss daher zunächst der Sperrring aus der Ringnut gelöst werden, wenn nicht die Zerstörung der Rastzungen in Kauf genommen wird.

Bei Bandrollen mit einem Rollenkörper aus Kunststoff werden die die Wälzlager aufnehmenden Lagerflächen nachbearbeitet, weil bei der Herstellung der Rollenkörper mit einem erstarrungsbedingten Verzug gerechnet werden muss. Um den mit einer solchen Nachbearbeitung verbundenen Aufwand zu vermeiden, kann der Rollenkörper gewellte Lagerflächen mit in axialer Richtung verlaufenden Wellenbergen und Wellentälern für die beiden Wälzlager bilden, wobei der Hüllzylinder der Wellenberge im unbelasteten Zustand der Lagerflächen einen kleineren, der Hüllzylinder der Wellentäler jedoch einen größeren Durchmesser als der Außendurchmesser der Wälzlager aufweisen. Dies bedeutet, dass beim Aufbringen des Rollenkörpers auf die mit den Wälzlagern versehene Tragachse die Wellenberge durch die Wälzlager gegen die Wellentäler verdrängt werden, was zu einem Toleranzausgleich und zur Ausbildung eines Presssitzes führt.

Es ist zwar beim Einpressen von Wälzlagern in rohrförmige Lageransätze zum Aufnehmen der Welle von Drosselklappen eines Verbrennungsmotors bekannt (DE 10 2011 013 048 A1, DE 1 02007 041 900 A1), die Lageransätze im Bereich der die Wälzlager aufnehmenden Innenwandung mit über den Umfang verteilten, axial ausgerichteten Vorsprüngen zu versehen, über die eine Presspassung zwischen den Lageransätzen und den Wälzlagern erreicht wird, sodass in den Bereichen zwischen den radialen Vorsprüngen eine Entlastung der Lageransätze eintritt, doch müssen für die radialen Vorsprünge vergleichsweise enge Fertigungstoleranzen vorgegeben werden, um eine geforderte Presspassung ohne Überlastung der Lageransätze zu ermöglichen. Ein solcher Stand der Technik kann daher das Vermeiden einer Nachbearbeitung von Lageraufnahmen, die fertigungsbedingt einen zu großen Toleranzbereich aufweisen, nicht nahelegen.

In der Zeichnung ist der Erfindungsgegenstand beispielsweise dargestellt. Es zeigen
- Fig. 1: eine erfindungsgemäße Vorrichtung zur Seitenführung eines Förderbands in einem Axialschnitt,
- Fig. 2: einen Schnitt durch den Rollenkörper der Bandrolle nach der Linie II-II der Fig. 1 und
- Fig. 3: einen Schnitt nach der Linie III-III der Fig. 1 in einem größeren Maßstab.

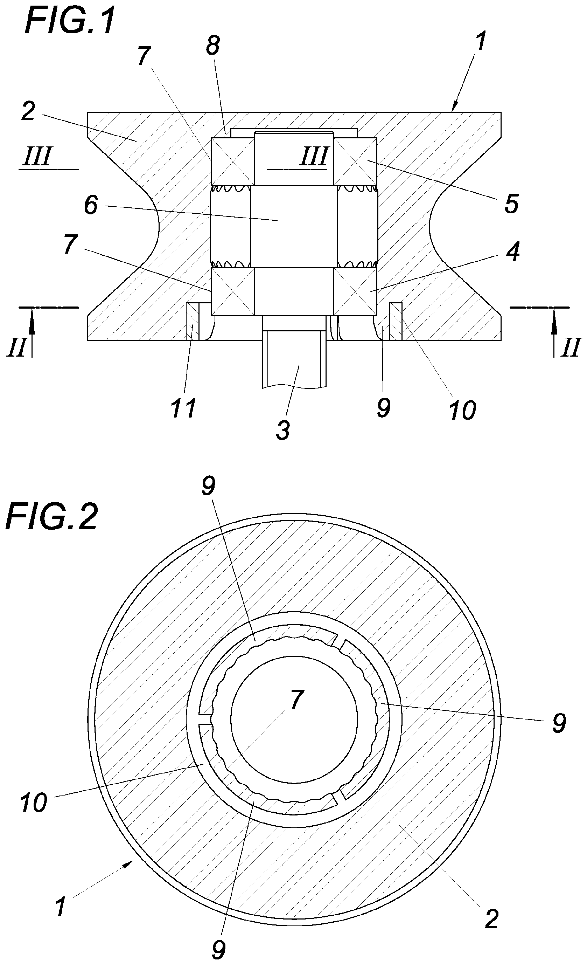

Die Vorrichtung zur Seitenführung eines Förderbands weist gemäß Fig. 1 eine Bandrolle 1 mit einem Rollenkörper 2 aus Kunststoff sowie eine Tragachse 3 auf, auf der der Rollenkörper 2 mithilfe zweier Wälzlager 4, 5 gelagert ist. Die beiden Wälzlager 4, 5 werden durch einen einen größeren Durchmesser aufweisenden Bund 6 der Tragachse 3 in einem axialen Abstand voneinander gehalten. Dieser Bund 6 bedingt, dass die Wälzlager 4, 5 von einander gegenüberliegenden Seiten auf die Tragachse 3 aufgebracht werden müssen. Zum Montieren der Bandrolle 1 wird der Rollenkörper 2 auf die Tragachse 3 mit den montierten Wälzlagern 4, 5 aufgeschoben. Zur Aufnahme der Wälzlager 4, 5 bildet der Rollenkörper 2 entsprechende Lagerflächen 7.

Die axiale Festlegung des Rollenkörpers 2 gegenüber den Wälzlagern 4, 5 erfolgt durch axiale Anschläge für die Wälzlager 4, 5. Für das Wälzlager 5 am freien Ende der Tragachse 3 bildet die Stirnwand 8 einen entsprechenden Anschlag. Für das gegenüberliegende Wälzlager 4 sind hierfür federnde Rastzungen 9 vorgesehen, die vom übrigen Rollenkörper 2 durch eine Ringnut 10 getrennt sind und sich in der Montagelage des Rollenkörpers 2 aufgrund ihrer federnden Rückstellkräfte nach einer durch das Einschieben der Wälzkörper 4, 5 bedingten Verlagerung radial nach außen vor das Wälzlager 4 legen, sodass die beiden Wälzlager 4, 5 an ihren voneinander abgekehrten äußeren Stirnseiten einerseits an der Stirnwand 8 und anderseits an den Rastzungen 9 axial abgestützt sind. Die in der Fig. 1 gezeigte Raststellung der Rastzungen 9 wird durch eine Sperrring 11 gesichert, der in die Ringnut 10 eingesetzt wird und ein federndes Ausweichen der Rastzunge 9 radial nach außen verhindert. Obwohl in der Fig. 2 drei Rastzungen 9 angedeutet sind, ist diese Anzahl der Rastzungen keineswegs zwingend. Es geht ja lediglich darum, einerseits eine für die Montage ausreichende Federung der Rastzungen 9 zu sichern und anderseits für eine entsprechende Stützkraft zur axialen Festlegung der Wälzlager 4, 5 zu sorgen.

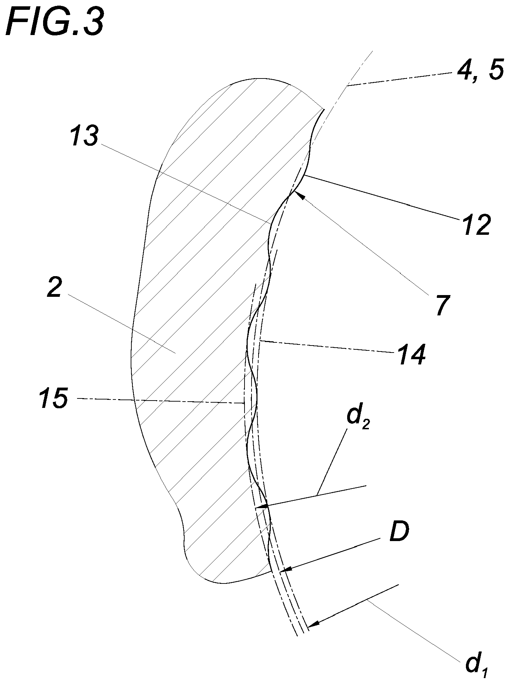

Wie insbesondere der Fig. 3 entnommen werden kann, sind die Lagerflächen 7 zur Aufnahme der Wälzlager 4, 5 gewellt ausgebildet, und zwar mit in axialer Richtung verlaufenden Wellenbergen 12 und Wellentälern 13. Die Anordnung ist dabei so getroffen, dass der die Wellenberge 12 einhüllende Hüllzylinder 14 im unbelasteten Zustand der Lagerflächen 7 einen kleineren Durchmesser d₁ und der Hüllzylinder 15 der Wellentäler 13 eine größeren Durchmesser d₂ als der Außendurchmesser D der strichpunktiert angedeuteten Wälzlager 4, 5 aufweisen. Dies bedeutet, dass beim Aufschieben des Rollenkörpers 2 auf die auf der Tragachse 3 vormonierten Wälzlager 4, 5 ein Presssitz zwischen den Wälzlagern 4, 5 und dem Rollenkörper 2 erreicht wird, und zwar unter einem Ausgleich allfälliger Fertigungstoleranzen des Rollenkörpers 2, weil mit dem Aufschieben des Rollenkörpers 2 auf die Wälzlager 4, 5 die Wellenberge 12 durch die Wälzlager 4, 5 gegen die Wellentäler 13 hin verdrängt werden.

## Patentansprüche

1. Vorrichtung zur Seitenführung eines Förderbands mit einer Bandrolle (1), deren Rollenkörper (2) aus Kunststoff auf einer Tragachse (3) mithilfe von zwei mit axialem Abstand voneinander angeordneten Wälzlagern (4, 5) frei drehbar gelagert ist, die an einem zwischen ihnen vorgesehen Bund (6) der Tragachse (3) gegenüber dieser axial abgestützt sind, **dadurch gekennzeichnet, dass** die beiden Wälzlagern (4, 5) zwischen einer Stirnwand (8) des Rollenkörpers (2) und radial einspringenden, durch eine Ringnut (10) auf der der Stirnwand (8) gegenüberliegenden Stirnseite vom übrigen Rollenkörper (2) getrennten, federnden Rastzungen (9) gegenüber dem Rollenkörper (2) axial festgehalten sind, und dass ein Sperrring (11) formschlüssig in die Ringnut (10) des Rollenkörpers (2) eingreift.

2. Vorrichtung nach Anspruch 1, **dadurch gekennzeichnet, dass** der Rollenkörper (2) gewellte Lagerflächen (7) mit in axialer Richtung verlaufenden Wellenbergen (12) und Wellentälern (13) für die beiden Wälzlager (4, 5) bildet und dass der Hüllzylinder (14) der Wellenberge (12) im unbelasteten Zustand der Lagerflächen (7) einen kleineren, der Hüllzylinder (15) der Wellentäler (13) jedoch einen größeren Durchmesser (d₁, d₂) als der Außendurchmesser (D) der Wälzlager (4, 5) aufweisen.

## Claims

1. Device for lateral guidance of a conveyor belt with a belt roller (1), the roller body (2) of which, made from synthetic material, is mounted in a freely rotatable manner on a support axle (3) with the aid of two roller bearings (4, 5) which are disposed with axial spacing from each other and are axially supported with respect to the support axle (3) on a collar (6) - provided between them - of the support axle, **characterised in that** the two roller bearings (4, 5) are fixedly held axially with respect to the roller body (2) between an end wall (8) of the roller body (2) and radially re-entrant, resilient latching tongues (9) which are separated from the remainder of the roller body (2) by an annular groove (10) on the end face opposite the end wall (8), and **in that** a blocking ring (11) engages in a form-fitting manner into the annular groove (10) of the roller body (2).

2. Device as claimed in claim 1, **characterised in that** the roller body (2) forms undulating bearing surfaces (7) with wave troughs (13) and wave peaks (12) extending in the axial direction for the two roller bearings (4, 5) and that the envelope cylinder (14) of the wave peaks (12) in the unloaded state of the bearing surfaces (7) comprises a smaller, but the envelope cylinder (15) of the wave troughs (13) comprises a larger diameter (d₁, d₂) than the outer diameter (D) of the roller bearings (4, 5).

## Revendications

1. Dispositif pour le guidage latéral d'une bande transporteuse avec un galet de bande (1) dont le corps de galet (2) en matière plastique est monté de manière librement pivotante sur un essieu porteur (3) à l'aide de deux paliers à roulement (4, 5) espacés axialement entre eux qui sont appuyés axialement par rapport à l'essieu porteur (3) sur une courroie(6) de celui-ci prévue entre eux, **caractérisé en ce que** les deux paliers à roulement (4, 5) sont maintenus axialement entre une paroi frontale (8) du corps de galet (2) et des languettes d'enclenchement (9) élastiques rentrant radialement, séparées du reste du corps de galet (2) par une rainure annulaire (10) sur la face frontale opposée à la paroi frontale (8), et qu'une bague de blocage (11) s'engage mécaniquement dans la rainure annulaire (10) du corps de galet (2).

2. Dispositif selon la revendication 1, **caractérisé en ce que** le corps de galet (2) présente des surfaces de contact ondulées (7) avec des crêtes (12) et des creux (13) courant dans la direction axiale pour les deux paliers à roulement (4, 5) et que le cylindre d'enveloppe (14) des crêtes (12) présente, à l'état non contraint des surfaces de contact (7), un diamètre (d1, d2) inférieur au diamètre extérieur (D) des paliers à roulement (4, 5), tandis que le cylindre d'enveloppe (15) des creux (13) présente un diamètre (d2) supérieur.
